# EUROPEAN PATENT APPLICATION

(11) **EP 2 031 679 A2**
(43) Date of publication of application: **04.03.2009**
(21) Application number: 08014850.5
(22) Date of filing: 21.08.2008
(51) Int. Cl.: H01M 4/86, H01M 4/88, H01M 4/90, H01M 8/12

(54) **Composite electrodes**

(30) Priority: 31.08.2007 DK 200701243
(71) Applicant: Technical University of Denmark, 2800 Lyngby (DK)
(72) Inventor: Menon, Mohan, 2640 Hedehusene (DK); Larsen, Peter Halvor, 4000 Roskilde (DK)

(57) **Abstract**

Electrode material obtainable according to a process comprising the steps of: (a) providing a precursor solution or suspension of a first component, said solution or suspension containing a solvent; (b) forming particles of the first component and entrapping said particles within the pore structure of a second component by mixing and subsequently heating, drying or centrifuging a solution or suspension or powder of the second component with the precursor solution or suspension of said first component, in which said second component has a porous structure with average pore diameter of 2 to 1000 nm.

## Description

### FIELD OF THE INVENTION

The present invention relates to novel composite materials. The composite materials are suitable for use in a wide range of applications such as electrodes in fuel cells, especially as cathodes, electrodes for electrolytic cells, electrodes for electrochemical flue gas purification and electrodes for oxygen or hydrogen separation membranes. More particularly, the invention relates to electrode materials in which a first component is finely dispersed in the nano- to submicron range of the matrix of a second component.

### BACKGROUND OF THE INVENTION

Composite mixtures formed normally by the combination of powders with complementing properties play an important role in many applications. The microstructure of the composite mixture and the properties of the powders determine the performance of the composite mixtures and the devices they are used in.

LSCF/CGO or LSM/YSZ composite powders are well known in fuel cell applications. The use of LSCF/CGO composites as the preferred cathode material in Solid Oxide Fuel Cells (SOFC) is described in a number of citations, e.g. US 6,794,075 Steele et al., US 2003/0027033 Seabaugh et al., and G. Sivasundram and J.A. Kilner Electrochemical Society Proceedings Vol. 2003-07, 533-541 or G. G. Sivasundram and J.A. Kilner Proceedings of the 5th European Fuel Cell Forum Vol. 1, 335-342.

Patent application WO 2006/079800 discloses a process for the preparation of fuel cell cathodes involving providing a layer of LSCF/CGO composite, isostatically pressing this layer between 10 and 300 MPa, providing a second layer comprising a perovskite electrode to define a bi-layer and firing the bi-layer in a reducing atmosphere. An enhancement during operation at lower temperature is observed due to the reduction step under firing, which creates pores in the nano-scale range.

G. G. Sivasundram and J.A. Kilner Proceedings of the 5th European Fuel Cell Forum Vol. 1, 335-342, describe a process in which the porosity of LSCF/CGO composites is promoted by the addition of PMMA (polymethylmethacrylate) or carbon, which upon combustion leave a pore structure within the composite.

US patent No. 6,146,445 Chen et al. describes a LSC having a stabilizing amount of CGO which is used for ceramic membranes. The CGO is incorporated in the LSC and the mixture is then sintered to obtain a stabilized cubic LSC structure.

According to the prior art, the conventional way of preparing the LSCF/CGO composite is by intensively mixing separate powders of LSCF and CGO in the presence of a solvent, followed by drying and sieving.

Patent application US 2003/0027033 Seabaugh et al. discloses a method for making nano-composite electrode materials by attrition or ball milling of a nano-scale electrolyte powder and an electrode powder followed by calcination of the milled powder mixture. This application teaches also a method of coating the outer surface of particles in which an electrode powder being a water soluble precursor to the metals nickel, copper, silver and combinations thereof is dissolved in a nano-scale electrolyte dispersion. A base aqueous solution such as ammonium hydroxide is then added to precipitate the metal precursor on the surface of the nano-scale electrolyte, and subsequently the precipitated solid product is separated and finally calcined.

US Patent No. 6,803,138 Seabaugh et al. discloses the preparation of a bimodal spray coating by combining powders, in which a suspension of a first component having particles of about 200 nm is mixed with a nanoscale powder having particle size below 100 nm. The resulting bimodal slurry mixture is stirred and subjected to sonication.

### SUMMARY OF THE INVENTION

We have found that higher performance and stability in devices and applications where composite materials are applied require a high dispersion of fine particles of a first component in the nano to sub-micron scale of the matrix of a second component. Such devices and applications include electrodes in fuel cells, electrolytic cells and electrodes for electrochemical flue gas purification, oxygen or hydrogen separation membranes. In particular, the highly attractive operation of SOFC at temperatures below about 800°C requires the use of a proper cathode material. SOFC operation at intermediate or low temperatures, i.e. below about 800°C, preferably at 500-700°C, is for instance enhanced by using LSCF-CGO cathodes (LSCF: (La₁₋ₓSrₓ)ₛ(Co_{1-y}Fe_{y})O_{3-δ} , CGO: (Ce₁₋ₓGdₓ)O_{2-δ})) in which CGO and/or LSCF have grain particle sizes in the nano and submicron scale range, i.e. in the order of 1000 nm or below (submicron range), or even better 100 nm or below (nano range). However, these fine particles may coarsen, i.e. increase in size, during operation leading to a very high degradation of the material and thereby poor stability. The LSCF particles may be coarsened prior to application leading to a more stable cathode but this is accompanied by a poorer performance in terms of higher Area Specific Resistance (ASR).

By the invention it is now possible to achieve both good stability (limited coarsening) and high performance (low ASR) of the resulting composite electrode material. Fine electrode powders can be prepared in an simple manner by e.g. heating precursors of the one component in the presence of mesoporous powders of another component having average pore diameter of 2 nm to 100 nm (nano-scale range) and even up to 1000 nm (submicron-scale range). The first component not only coats the surface of the second mesoporous component, but it deposits also within its fine pore structure.

As used herein the term mesoporous component defines compounds of particles having pore structures of average pore diameter between 2 and 1000 nm, preferably 2 to 300 nm, more preferably 2 to 100 nm, most preferably 2 to 50 nm. Such mesoporous components are found to have a surface area (BET) of above 5 m²/g, preferably above 20 m²/g, more preferably of about 100 m²/g or higher, such as 150, 200, 250 or 300 m²/g.

Accordingly, we provide an electrode material obtainable according to a process comprising the steps of:
(a) providing a precursor solution or suspension of a first component said solution or suspension containing a solvent,
(b) forming particles of the first component and entrapping said particles within the pore structure of a second component by mixing and subsequently heating, drying or centrifuging a solution or suspension or powder of the second component with the precursor solution or suspension of said first component, in which said second component has a porous structure with average pore diameter of 2 to 1000 nm.

As used herein the term powder defines a collection of particles with a mean particle diameter in the range 0.2-100 µm, preferably 0.1-10 µm, such as about 0.2, 0.5, 1.0 or 5 µm.

The particles of the first component formed in step (b) are particles with average diameter of 2 to 5000 nm (up to submicron-scale range), preferably nano-sized particles with average diameter of 2 to 100 nm. The average diameter of the particles preferably lies within a particle size range that is smaller than the average pore diameter of the powder of the second component thus ensuring a sufficient filling of the pores of the latter.

The composite electrode materials according to the invention are easier to prepare and also superior in terms of performance and stability than those obtained according to prior art methods. By the invention small particles of the first component preferably nano-sized particles are formed in-situ, i.e. during the process and subsequently entrapped within the fine porous structure (mesoporous structure) of the second component.

As used herein the term entrapped or entrapping means confining the in-situ formed particles of the first component within a restricted space here within the fine porous structure of the second component.

The heating, drying or centrifuging in step (b) enables the removal of the solvent(s) in the mixture. When an organic solvent is present in the mixed solution or suspension of the first and second (mesoporous) components, the removal of the solvent may be achieved by simple drying or evaporation at room temperature or by heating in an oxygen containing environment to ensure combustion of the solvent. Particularly for suspensions, the removal of the solvent may be effected by subjecting the suspension to a centrifuging step, whereby the resulting composite electrode material (composite powder) is separated from the supernatant. The centrifuging step may also be conducted after a previous heating. When the solvent is water, its removal may take effect by heating at about 100°C or above in order to evaporate the water. When preparing agglomerates of the second component, as described below, the heating is conducted at above 200°C, preferably above 400°C, for instance by heating in air at 200 - 600°C. The heating ensures also complete decomposition of the precursor of the first component for instance LSM-nitrate and attendant deposition of the first component (LSM) within the fine pore structure of the second component.

In the preparation of the precursor solution or suspension of the first component of step (a) said solution or suspension may be subjected to heating, for instance at 80°C, 250°C or even up to 500°C in order to increase the viscosity of the solution or suspension up to a proper level, often up to about 100 mPa-s (at room temperature) prior to introducing the second component. Higher viscosity of the precursor solution results in more cations in the polymer and longer polymer chains in the precursor solution. By controlling the amount of cations in the polymer chains, the amount of first component to be added can be controlled. Further, the polymerisation ensures an accurate control of the chemical composition since the cations are bonded to the polymer chains. In addition, the viscosity and surface tension of the solution will depend on the length of the polymer chain, thus enabling a better control on the wetting behaviour of the solution of the first component.

In order to ensure good wettability of the solution or the suspension of the first component a surfactant may be added. Alternatively, the surfactant may be added to the second component prior to being mixed with the first component. Furthermore, a good pore filling of the second component by mixing with the solution or suspension of the first component may be achieved by for instance vacuum impregnation. It may be necessary to repeat the mixing step one or more times in order to achieve the desired composition of the composite powder.

In case of suspensions of the first component, the particles may be dispersed by for instance adjusting the pH below or above the isoelectric point or by adding dispersants.

The mixing step (b) may be conducted by simply introducing powder of the second component into the precursor solution or suspension of the first component (step (a)), or by simply pouring the precursor solution or suspension of the first component into the pores of the second component, which in a preferred embodiment is a powder.

Instead of directly introducing a powder of the second component into the precursor solution or suspension of step (a), the mixing step (b) may be conducted by introducing a slurry or suspension of the second component into the precursor solution or suspension of step (a). Accordingly, in a preferred embodiment of the invention the second component in step (b) is provided as a suspension which is prepared by mixing a powder of said second component having a porous structure with average pore diameter of 2 to 100 nm with a solvent.

In a suspension, particles can be agglomerated and settled, thereby enabling their separation from the solvent. Agglomeration may be brought about by manipulating the interparticle forces between the particles in the suspension, either by changing the pH to the iso-electric point or by addition of excess of steric dispersants.

Hence, in yet another embodiment of the invention the second component in step (b) is provided as a suspension which is prepared by mixing a powder of said second component having a porous structure with average pore diameter of 2 to 100 nm with a solvent and wherein agglomerates of the second component are formed by changing the pH of the combined solution or suspension of step (b), i.e. the suspension obtainable by mixing the suspension of the second component with the precursor solution or suspension of the first component.

Accordingly, the solutions or suspensions of the first and second component are mixed and the agglomerates of the second component are formed by changing the pH of the resulting combined solution/suspension. The pH may be changed, e.g. lowered, during and/or after the mixing in order to destabilize the combined solution/suspension. The agglomerates of the second component form a porous bed containing particles of the first component which not only coat the outer surfaces of the particles of this second component, but also penetrate into the fine pore structure.

The suspension of the second component may already contain agglomerates prior to being mixed with the precursor solution or suspension of the first component. Hence, according to a further embodiment of the invention the second component in step (b) is provided as a suspension which is prepared by mixing a powder of said second component having a porous structure with average pore diameter of 2 to 100 nm with a solvent and wherein the suspension of the second component contains agglomerates of said second component which are formed by changing the pH of said suspension. Optionally, a subsequent separation of said agglomerates from the solvent in the suspension of this second component is conducted.

The suspension of the second component, for instance YSZ, may be prepared by suspending particles of said second component in a solvent such as an alcohol preferably ethanol, adjusting the pH of the suspension to 2 - 5 through the addition of an acid, subsequently adjusting the pH of the suspension to the isoelectric point of the suspension, preferably at a pH of 6-7 and separating the second component from the solvent. The adjustment of the pH in the suspension of the second component, for instance down to pH = 4 through the addition of acetic acid enables the formation of a stable suspension, while the subsequent pH adjustment to the isoelectric point enables the formation of agglomerates of the second component in the form of a sediment, such as a porous cake, which is then easily separated from the solvent.

In another embodiment of the invention, a powder of the second component having a porous structure is provided with electrosteric dispersants such as polyethylene imine (PEI) adsorbed to the surface of the particles forming the powder of the second component and said powder is contacted with a suspension of the first component, in which said suspension of the first component is prepared by suspending particles of said first component in a solvent, such as an alcohol, preferably ethanol and the pH of the suspension of this first component is adjusted to above 7, preferably to pH = 9-11, through the addition of a basic agent.

The powder of the second porous component may be pressed into pellets prior to contacting said suspension of the first component.

The provision of electrosteric dispersants enables that the inner and outer surface of the particles of the second component, e.g. YSZ, becomes positively charged. By increasing the pH of the suspension of the first component through the addition of a basic agent such as NH₄OH, for instance up to pH = 9, the particles of said first component become negatively charged. The resulting composite electrode material is obtained by mixing the suspension of the negatively charged first component with the positively charged second component. When the porous second component comes into contact with a solvent such as water or ethanol of the suspension of the first component, the negatively charged particles of the first component are forced to adsorb onto the surface and within the pores of the second component.

In order to control the surface area of the resulting composite material which is suitable for ceramic preparation methods in SOFC manufacture, such as tape casting and screen printing, the composite electrode material obtained may be further subjected to a calcination step at for instance 700-1200°C for 1 to 4 hours.

A further control of the surface area and the microstructure of the composite may be achieved by re-impregnation subsequent to the sintering (calcining) step. Hence, in yet another embodiment of the invention the electrode is impregnated with the first component subsequent to the sintering step thereby providing additional nano-particles within the fine porous structure of the second component.

Preferred electrode materials are those obtainable by combining electrochemical active anode or cathode materials as the first component with ion/proton conductors such as electrolyte materials as the second component. Alternatively, the first component may be the electrolyte material and the second component the anode or cathode material. Other preferred electrode materials are those obtainable by combining different cathode materials as either the first or second component. Accordingly, in one embodiment of the invention we provide an electrode material, wherein the first and second component is selected from the group consisting of: anode materials, cathode materials and electrolyte materials.

Preferably the first component is a cathode material or electrolyte material and the second component is an electrolyte material or cathode material. More preferably, the first component is a cathode material and the second component is an electrolyte material. In another embodiment the first component is an anode material and the second component an electrolyte material.

The anode material is preferably selected from the group consisting of compositions comprising NiO and/or doped zirconia and/or doped ceria alone or mixed with Al₂O₃, TiO₂, Cr₂O₃, MgO or the anode material is a material selected from the group consisting of MaₛTi₁₋ₓMbₓO_{3-δ}, where Ma = La, Ba, Sr, Ca; Mb = V, Nb, Ta, Mo, W, Th, U; 0 ≤ s ≤ 0.5; or LnCr₁₋ₓMₓO_{3-δ}, where M = Ti, V, Mn, Nb, Mo, W, Th, U and Ln = Lanthanides.

The electrolyte material is preferably selected from the group consisting of doped zirconia, doped ceria, doped gallates and proton conducting electrolytes, in which the dopants are Sc, Y, Ce, Ga, Sm, Gd, Ca and/or any Ln element (Ln = Lanthanide) or combinations thereof.

The cathode material is preferably selected from the group consisting of (La₁₋ₓSrₓ)ₛMnO_{3-δ} and (A₁₋ₓB_{X})ₛFe_{1-y}Co_{y}O_{3-δ}, where A = La, Gd, Y, Sm, Ln or mixtures thereof and B = Ba, Sr, Ca or mixtures thereof.

In a further embodiment of the invention the first component is LSCF or CGO and the second component is CGO or LSCF (LSCF: (La₁₋ₓSrₓ)ₛ(Co_{1-y}Fe_{y})O_{3-δ} , CGO: (Ce₁₋ₓGdₓ)O_{2-δ})), as these represent the most available and suitable materials for the preparation of composite cathodes. Thereby a composite cathode material is obtained which is particularly suitable for low or intermediate temperature (500-700°C) operation of SOFC that combines the ionic and electronic conductivity properties of LSCF and CGO: LSCF which normally is a cathode material possesses both ionic and electronic conductivity at intermediate temperatures (about 700°C) but becomes more an electronic conductor at lower temperatures e.g. close to 500°C. On the other hand, CGO which is normally used as electrolyte possesses high ionic conductivity at such low temperatures.

According to the invention, LSCF particles from a precursor solution or suspension are deposited into porous CGO particles or vice-versa. Mesoporous CGO or LSCF particles may be introduced into the LSCF or CGO precursor solution, respectively, prior to centrifuging or drying or heating in an oxygen environment. Upon drying or heating, evaporation and/or combustion of the solvent takes place and the LSCF or CGO particles will form into the mesoporous CGO or LSCF powder. The resulting composite powder may then be sprayed or screen printed as cathode on SOFC half cells. Where for instance LSFC precursor solution is combined with mesoporous CGO coarsening of the LSCF particles is limited since growth of the LSCF particles is suppressed by the walls in the mesoporous CGO structure. Consequently, the fine nano-sized particles formed during e.g. combustion result in high performance and at the same time stability against coarsening. In other words, by keeping the LSCF particles in the nano-size range (no coarsening) high performance and stability of the composite powder is achieved. The high porosity of the resulting composite enables also the transport of oxygen to reaction sites for its electrochemical reduction. Several impregnation steps of the porous component may be necessary to achieve the required amount of the first component.

By the invention it is also possible to form a composite material of one single material alone for instance LSCF by incorporating LSCF particles into the matrix of a mesoporous LSCF.

In yet another embodiment of the invention the first component is LSM ((La₁₋ₓSrₓ)ₛMnO_{3-δ}) or SYSZ ((Zr_{1-x-z}YₓSc_{z})O_{2-d}) and the second component is SYSZ or LSM. Preferably, the first component is LSM and the second component SYSZ. These components are particularly suitable for the preparation of cathode materials.

In yet another embodiment of the invention the first component is LSC ((La₁₋ₓSrₓ)ₛCoO_{3-δ}) or CGO ((Ce₁₋ₓGdₓ)O_{2-δ}) and the second component is CGO or LSC. Preferably, the first component is LSC and the second component CGO.

In a further embodiment an anode material is provided wherein the first component is NiO or SYSZ and the second component is SYSZ or NiO.

The amount of the first component in the resulting electrode material represents 20 to 90 vol% of the total volume and more preferred 30 to 60%. An even more preferred electrode material used as cathode contains 45 vol. % LSCF and 55 vol% CGO. At these relative proportions of LSCF and CGO the best cathode materials for low or intermediate temperature (500°C to 700°C) SOFC are obtained, since it is necessary that the cathode material possess both ionic and electronic conductivity at such low temperatures. As explained above, LSCF is known to be an ionic and electronic conductor i.e. a mixed conductor. However, at temperatures below 700°C the bulk of LSCF conductivity is electronic, while CGO at these temperatures is known to be a good ionic conductor.

The invention encompasses also a fuel cell, preferably a solid oxide fuel cell (SOFC) stack comprising a plurality of such fuel cells, a hydrogen separation membrane or an oxygen separation membrane, or a solid electrolytyser cell (SOEC) comprising an electrode material according to the invention as recited in claims 11-15.

### EXAMPLES

### Example 1 Manufacture of SOFC comprising of LSCF - CGO composite powder mixture as cathode

### Step 1: Preparation of precursor solution of first component:

Nitrates of La, Sr, Fe and Co were calibrated for cation yield by heating them and monitoring the weight loss in a TGA (thermogravimetric analyzer). Precursor solution for (La_{0.6}Sr_{0.4})ₛFe_{0.8}Co_{0.2}O₃ (LSCF) powders were prepared by dissolving nitrates of La, Sr, Fe and Co respectively in water. Glycine was then added at a ratio of 55 wt% of the amount of nitrate ions in the solution. 0.1 wt% of Triton-x was added to the solution as surfactant.

### Step 2: Preparation of porous component (second component):

Porous Gd_{0.1}Ce_{0.9}O_{1.95} (CGO) was prepared by dissolving Ce(NO₃)₃.6H₂O and Gd(NO₃).5H₂O in ethanol and adding 3 wt% of Pluronic 123. The mixture was stirred until a clear solution was attained. This solution was dried overnight in ambient conditions and then calcined at 500°C for 2h, resulting in porous CGO powders.

### Step 3: Preparation of composite:

Porous CGO powders and the solution from step 1 were then mixed together and heated such that the water starts to boil and evaporate. Finally, the mixture combusts resulting in formation of LSCF powders on the surface and in the pores of CGO. The impregnation step is repeated five times.

### Step 4: Preparation of SOFC:

Half cells comprising of anode support, anode, electrolyte and a reaction barrier layer were prepared. NiO and YSZ powders were mixed with organic binder system and tape casted to form anode support. Anode layer consisting of NiO and YSZ, electrolyte consisting of YSZ and a CGO barrier layer were sprayed sequentially on top of these supports and the "half-cell" sintered at high temperatures. Sintered half cells were then tested for gas tightness. The composite powders prepared in step 3 were then mixed with polyvinyl pyrrolidone (PVP), polyvinyl butyral (PVB) and ethanol and ball milled. After control of particle size, the suspension was sprayed on gas tight half cells and sintered above 800°C.

The porous component of step 2 can also be purchased commercially.

### Example 2 Manufacture of SOFC comprising of LSCF - CGO composite powder mixture as cathode and with subsequent impregnation of first component solution into cathode.

### Step 1 - 4 as in Example 1.

### Step 5: Impregnation of cathode:

The cathode formed in step 1-4 was impregnated 4 times with the precursor solution from step 1. The cell was heat treated at 400°C between each impregnation.

### Example 3 Manufacture of SOFC comprising of LSCF - CGO composite powder mixture as cathode and with subsequent impregnation of LSC solution into cathode

### Step 1 - 4 as in Example 1

### Step 5: Preparation of first component for impregnation into cathode:

Nitrates of La, Sr and Co were calibrated for cation yield by heating and monitoring the weight loss in a TGA. Precursor solution for (La_{0.6}Sr_{0.4})ₛCoO₃ (LSC) powders were prepared by dissolving nitrates of La, Sr and Co, ethylene glycol and concentrated HNO₃ in water. The solution was heated at 250°C for the cations to polymerize. The solution was cooled when the room temperature viscosity of the solution reached 50 mPa·s.

### Step 6: Impregnation of cathode:

The cathode formed in step 1-4 was impregnated 4 times with the precursor solution from step 5. The cell was heat treated at 400°C between each impregnation.

### Example 4 Manufacture of SOFC comprising of LSCF - CGO composite powder mixture as cathode

### Step 1: Preparation of precursor solution of first component:

Nitrates of La, Sr, Fe and Co were calibrated for cation yield by heating them and monitoring the weight loss in a TGA. Precursor solution for (La_{0.6}Sr_{0.4})ₛFe_{0.8}Co_{0.2}O₃ (LSCF) powders were prepared by dissolving nitrates of La, Sr, Fe and Co, ethylene glycol and concentrated HNO₃ in water.
The solution was heated at 250°C for the cations to polymerize. The solution was cooled when the room temperature viscosity of the solution reached 50 mPa·s.

### Step 2: Preparation of porous component (second component):

Porous CGO was prepared similar to step 2 from Example 1.

### Step 3: Preparation of composite:

Porous CGO powders and the solution from step 1 were then mixed together and heated above 400°C, resulting in formation of LSCF powders on the surface and in the pores of CGO. The impregnation step is repeated six times.

### Step 4: Preparation of SOFC:

SOFC was prepared similar to step 4 from Example 1.

### Example 5 Manufacture of SOFC comprising of LSC - CGO composite powder mixture as cathode

### Step 1: Preparation of precursor solution of first component:

Nitrates of Ce and Gd were calibrated for cation yield by heating them and monitoring the weight loss in a TGA. Precursor solution for CGO was prepared by dissolving 0.01 moles of Gd nitrate and 0.09 moles of Ce nitrate in water. Glycine was then added at a ratio of 55 wt% of the amount of nitrate ions in the solution. This solution results in 0.1 moles of CGO powder. 0.1 wt% of Triton-x was added to the solution as surfactant.

### Step 2: Preparation of porous component:

Porous LSC powder was prepared by dissolving nitrates of La, Sr and Co and 3 wt% of Pluronic 123 in ethanol. The mixture was stirred until a clear solution was attained. This solution was dried overnight in ambient conditions and then calcined at 500°C for 2h, resulting in porous LSC powder.

### Step 3: Preparation of composite:

Porous LSC powders and the solution from step 1 were then mixed together and heated such that the water starts to boil and evaporate. Finally, the mixture combusts resulting in formation of CGO powders on the surface and in the pores of LSC. The impregnation step is repeated five times.

### Step 4: Preparation of SOFC:

Half cells comprising of anode support, anode, electrolyte and a reaction barrier layer were prepared. NiO and YSZ powders were mixed with organic binder system and tape casted to form anode support. Anode layer consisting of NiO and YSZ, electrolyte consisting of YSZ and a CGO barrier layer were sprayed sequentially on top of these supports and the "half-cell" sintered at high temperatures. Sintered half cells were then tested for gas tightness. Screen printing inks of the powders prepared in step 3 were prepared by mixing the said powders with terpineol and after control of particle size and rheology, the ink was then screen printed on gas tight half cells and sintered above 900°C.

### Example 6 Manufacture of SOFC comprising of LSC - CGO composite powder mixture as cathode

### Step 1: Preparation of precursor solution of first component:

Nitrates of Ce and Gd were calibrated for cation yield by heating them and monitoring the weight loss in a TGA. Precursor solution for CGO was prepared by dissolving Gd nitrate and Ce nitrate, ethylene glycol and concentrated HNO₃ in water. The solution was heated at 80°C for the cations to polymerize. The solution was cooled when the room temperature viscosity of the solution reached 50 mPa·s.

### Step 2: Preparation of porous component (second component):

Porous LSC was prepared similar to step 2 from Example 5.

### Step 3: Preparation of composite:

Porous LSC powders and the solution from step 1 were then mixed together and heated above 400°C resulting in formation of CGO powders on the surface and in the pores of LSC. The impregnation step is repeated six times.

### Step 4: Preparation of SOFC:

SOFC was prepared similar to step 4 from Example 5.

### Example 7 Manufacture of SOFC comprising of LSC - LSC composite powder mixture as cathode

### Step 1: Preparation of precursor solution of first component:

Nitrates of La, Sr and Co were calibrated for cation yield by heating them and monitoring the weight loss in a TGA. Precursor solution for (La_{0.6}Sr_{0.4})ₛCoO₃ (LSC) powders were prepared by dissolving nitrates of La, Sr and Co, ethylene glycol and concentrated HNO₃ in water. The solution was heated at 250°C for the cations to polymerize. The solution was cooled when the room temperature viscosity of the solution reached 50 mPa·s.

### Step 2: Preparation of porous component:

Porous LSC powder was prepared by dissolving nitrates of La, Sr and Co, and 3 wt% of Pluronic 123 in ethanol. The mixture was stirred until a clear solution was attained. This solution was dried overnight in ambient conditions and then calcined at 500°C for 2h resulting in porous LSC powder.

### Step 3: Preparation of composite:

Porous LSC powders and the solution from step 1 were then mixed together and heated above 400°C resulting in formation of finer LSC powders on the surface and in the pores of LSC. The impregnation step is repeated three times.

### Step 4: Preparation of SOFC:

SOFC was prepared similar to step 4 from Example 5.

### Example 8 Manufacture of SOFC comprising of LSM - SYSZ composite powder mixture as cathode

### Step 1: Preparation of precursor solution of first component:

Nitrates of La, Sr and Mn were calibrated for cation yield by heating them and monitoring the weight loss in a TGA. Precursor solution for (La_{0.75}Sr_{0.25})ₛMnO₃ (LSM) powders were prepared by dissolving nitrates of La, Sr, and Mn respectively in water. Glycine was then added at a ratio of 55 wt% of the amount of nitrate ions in the solution.

### Step 2: Preparation of porous component (second component):

Mesoporous Sr_{0.04}Y_{0.20}Zr_{0.76}O₂ (SYSZ) was prepared by dissolving Scandium nitrate, Zirconyl nitrate, Yttrium nitrate and 3 wt% of Pluronic 123 in ethanol. The mixture was stirred until a clear solution was attained. This solution was dried overnight in ambient conditions and then calcined at 500°C for 2h resulting in mesoporous SYSZ powders.
The porous component of step 2 can also be purchased commercially.

### Step 3: Preparation of composite:

SYSZ mesoporous powders and the solution from step 1 were then mixed together and heated such that the water starts to boil and evaporate. Finally, the mixture combusts resulting in formation of LSM powders on the surface and in the pores of mesoporous SYSZ. The impregnation step is repeated four times.

### Step 4: Preparation of SOFC:

Half cells comprising of anode support, anode, electrolyte and a reaction barrier layer were prepared. NiO and SYSZ powders were mixed with organic binder system and tape casted to form anode support. Anode layer consisting of NiO and SYSZ and electrolyte consisting of SYSZ were sprayed sequentially on top of these supports, and the "half-cell" sintered at high temperatures. Sintered half cells were then tested for gas tightness. The powders prepared in step 3 were then mixed with polyvinyl pyrrolidone (PVP), polyvinyl butyral (PVB) and ethanol and ball milled. After control of particle size, the suspension was then sprayed on gas tight half cells and sintered above 900°C.

### Example 9 Manufacture of SOFC comprising of LSM - YSZ composite powder mixture as cathode

### Step 1: Preparation of precursor solution of first component:

Nitrates of La, Sr and Mn were calibrated for cation yield by heating them to 1000°C and monitoring the weight loss. Precursor solution for (La_{0.75}Sr_{0.25})ₛMnO₃ (LSM) powders were prepared by dissolving nitrates of La, Sr and Mn, ethylene glycol and concentrated HNO₃ in water. The solution was heated at 250°C for the cations to polymerize. The solution was cooled when the room temperature viscosity of the solution reached 50 mPa·s.

### Step 2: Preparation of porous component (second component):

Mesoporous Y_{0.16}Zr_{0.84}O₂ (YSZ) was prepared by dissolving Zirconyl nitrate, Yttrium nitrate and 3 wt% of Pluronic 123 in ethanol. The mixture was stirred until a clear solution was attained. This solution was dried overnight in ambient conditions and then calcined at 500°C for 2h resulting in mesoporous YSZ powders.

### Step 3: Preparation of composite:

Porous YSZ powders and the solution from step 1 were then mixed together and heated above 400°C resulting in formation of LSM powders on the surface and in the pores of YSZ. The impregnation step is repeated five times.

### Step 4: Preparation of SOFC:

SOFC was prepared similar to step 4 from Example 1.

### Example 10 Manufacture of SOFC comprising of NiO - YSZ composite powder mixture as anode

### Step 1: Preparation of precursor solution of first component:

Nickel nitrate was calibrated for cation yield by heating and monitoring the weight loss in a TGA. Precursor solution for NiO powder was prepared by dissolving nickel nitrate in water.

### Step 2: Preparation of porous component (second component):

As for step 2 in Example 9.

### Step 3: Preparation of composite:

Porous YSZ powders and the solution from step 1 were then mixed together and heated above 400°C resulting in formation of NiO powders on the surface and in the pores of YSZ. The impregnation step is repeated five times.

### Step 4: Preparation of SOFC:

Anode support comprising of NiO and YSZ were mixed with organic binder systems and tape casted. Anode prepared in step 3 was then mixed with PVP, PVB and ethanol and ball milled. After control of particle size, the suspension was sprayed on the anode support. Electrolyte suspension comprising of YSZ, PVP, PVB and ethanol was then sprayed on the anode. Half-cells were then stamped out and sintered at high temperatures. Subsequently, cathode was sprayed on to sintered half cells.

### Example 11 Manufacture of oxygen separation membrane comprising of LSCF - CGO composite powder mixture as cathode

### Step 1 - 3 as in Example 1:

### Step 4: Preparation of oxygen separation membrane:

NiO and YSZ powders were mixed with organic binder system and tape casted to form anode support. CGO tapes were prepared in similar fashion. These tapes were then laminated together and sintered. The powders prepared in step 3 were then mixed with polyvinyl pyrrolidone (PVP), polyvinyl butyral (PVB) and ethanol and ball milled. After control of particle size, the suspension was sprayed on gas tight half cells and sintered.

### Example 12 Manufacture of SOEC comprising of LSM - YSZ composite powder mixture as anode

### Step 1: Preparation of porous component (second component):

YSZ powders were calcined at 1300°C and ball milled.

### Step 2: Preparation of precursor solution of first component:

Precursor solution for LSM was prepared similar to step 1 in Example 9.

### Step 3: Preparation of composite:

Porous YSZ powders and the solution were then mixed together and heated above 400°C resulting in formation of LSM powders on the surface and in the pores of YSZ. The impregnation step is repeated six times.

### Step 4: Preparation of SOEC:

SOEC was prepared similar to step 4 from Example 1.

### Example 13 Manufacture of SOEC comprising of LSM - YSZ composite powder mixture as anode

### Step 1: Preparation of porous component (second component):

A stable suspension of YSZ powders in ethanol was prepared by mixing 10g of YSZ and 0.1g of Polyethyleneimine (PEI) in 50 g of ethanol.

Step 2: Preparation of precursor solution of first component

Precursor solution for LSM was prepared similar to step 1 in Example 9.

### Step 3: Preparation of composite:

The stable YSZ suspension (second component) and the precursor solution of the first component were then mixed together. Upon mixing the pH of the suspension was lowered and thus destabilizing the suspension. The YSZ powders agglomerated and formed a porous bed. The mixture was then heated above 400°C resulting in formation of LSM powders on the surface and in the pores of YSZ. The impregnation step is repeated five times.

### Step 4: Preparation of SOEC:

SOEC was prepared similar to step 4 from Example 1.

### Example 14 Manufacture of SOEC comprising of LSM - YSZ composite powder mixture as anode

### Step 1: Preparation of porous component (second component):

A stable suspension of YSZ powders in ethanol was prepared by suspending YSZ particles in ethanol. Acetic acid was added to lower the pH to 4, at which point the suspension was stable. YSZ powders were agglomerated by increasing the pH to the iso-electric point (pH = 6). The YSZ agglomerates separated from the ethanol and formed a porous cake at the bottom of the suspension.

### Step 2: Preparation of precursor solution of first component:

Precursor solution for LSM was prepared similar to step 1 in Example 9.

### Step 3: Preparation of composite:

The stable YSZ suspension (second component) and the solution were then mixed together. Upon mixing the pH of the suspension was lowered and thus destabilizing the suspension. The YSZ powders agglomerated and formed a porous bed. The mixture was then heated to above 400°C resulting in formation of LSM powders on the surface and in the pores of YSZ. The impregnation step is repeated six times.

### Step 4: Preparation of SOEC:

SOEC was prepared similar to step 4 from Example 1.

### Example 15 Manufacture of SOEC comprising of LSM - YSZ composite powder mixture as anode

### Step 1: Preparation of porous component (second component):

0.1 g of PEI was dissolved in 30 g of water. 10g of YSZ was then added to this solution and spray dried resulting in YSZ powders coated with PEI. Porous components were prepared by pressing the powders into pellets.

### Step 2: Preparation of suspension of first component:

LSM suspensions were prepared by mixing 10g of LSM in 30g of ethanol. The pH of the suspension was increased to 9 with addition of NH₄OH resulting in a negative charge on the LSM.

### Step 3: Preparation of composite:

The LSM suspension from step 2 was introduced into the treated YSZ pellet from step 1. The PEI on YSZ surfaces were positively charged upon introduction of the solvent from the LSM suspension. This ensured that the negatively charged LSM particle is adsorbed on the positively charged YSZ surface resulting in a YSZ - LSM composite.

### Step 4: Preparation of SOEC:

SOEC was prepared similar to step 4 from Example 1.

## Claims

1. Electrode material obtainable according to a process comprising the steps of:
(a) providing a precursor solution or suspension of a first component, said solution or suspension containing a solvent,
(b) forming particles of the first component and entrapping said particles within the pore structure of a second component by mixing and subsequently heating, drying or centrifuging a solution or suspension or powder of the second component with the precursor solution or suspension of said first component, in which said second component has a porous structure with average pore diameter of 2 to 1000 nm.

2. Electrode material according to claim 1, wherein the second component in step (b) is provided as a suspension which is prepared by mixing a powder of said second component having a porous structure with average pore diameter of 2 to 100 nm with a solvent.

3. Electrode material according to claim 2, wherein agglomerates of the second component are formed by changing the pH of the combined solution or suspension of step (b).

4. Electrode material according to claim 2, wherein said suspension of the second component contains agglomerates of said second component which are formed by changing the pH of said solution or suspension.

5. Electrode material according to claim 1, wherein the first and second component is selected from the group consisting of: anode materials, cathode materials and electrolyte materials.

6. Electrode material according to claim 5, wherein the anode material is selected from the group consisting of compositions comprising NiO and/or doped zirconia and/or doped ceria alone or mixed with Al₂O₃, TiO₂, Cr₂O₃, MgO, or the anode material is a material selected from the group consisting of MaₛTi₁₋ₓMbₓO_{3-δ}, where Ma = La, Ba, Sr, Ca; Mb = V, Nb, Ta, Mo, W, Th, U; 0 ≤ s ≤ 0.5; or LnCr₁₋ₓMₓO_{3-δ}, where M = Ti, V, Mn, Nb, Mo, W, Th, U and Ln = Lanthanides; and wherein the electrolyte material is selected from the group consisting of doped zirconia, doped ceria, doped gallates and proton conducting electrolytes, in which the dopants are Sc, Y, Ce, Ga, Sm, Gd, Ca and/or any Ln element or combinations thereof; and wherein the cathode material is selected from the group consisting of (La₁₋ₓSrₓ)ₛMnO_{3-δ} and (A₁₋ₓB_{X})ₛFe_{1-y}Co_{y}O_{3-δ}, where A = La, Gd, Y, Sm, Ln or mixtures thereof and B = Ba, Sr, Ca, or mixtures thereof.

7. Cathode material according to claim 5, wherein the first component is LSCF or CGO and the second component is CGO or LSCF.

8. Cathode material according to claim 5, wherein the first component is LSC or CGO and the second component is CGO or LSC.

9. Cathode material according to claim 5, wherein the first component is LSM or SYSZ and the second component is SYSZ or LSM.

10. Anode material according to claim 5, wherein the first component is NiO or SYSZ and the second component is SYSZ or NiO.

11. Solid oxide fuel cell stack comprising a plurality of fuel cells comprising an electrode material according to any of claims 1 to 10.

12. Electrodes for oxygen separation membranes comprising electrode material according to any of claims 1 to 10.

13. Electrodes for hydrogen separation membranes comprising electrode material according to any of claims 1 to 10.

14. Electrolytic cell comprising an electrode material according to any of claims 1 to 10.

15. Electrochemical flue gas cleaning cell comprising electrode materials according to any of claims 1 to 10.
